# EUROPEAN PATENT APPLICATION

(11) **EP 4 554 119 A1**
(43) Date of publication of application: **14.05.2025**
(21) Application number: 23835855.0
(22) Date of filing: 06.07.2023
(51) Int. Cl.: H04B 17/318, H04W 24/10, H04B 7/06, H04B 7/0408, H04W 72/21, H04W 24/08, H04L 1/00

(54) **METHOD AND DEVICE FOR TRANSMITTING BEAM PREDICTION REPORT IN WIRELESS COMMUNICATION SYSTEM**

(30) Priority: 06.07.2022 KR 20220083046
(71) Applicant: LG Electronics Inc., Yeongdeungpo-gu Seoul 07336 (KR)
(72) Inventor: KIM, Hyungtae, Seoul 06772 (KR); KANG, Jiwon, Seoul 06772 (KR); GO, Seongwon, Seoul 06772 (KR); PARK, Haewook, Seoul 06772 (KR)
(74) Representative: Plasseraud IP
(86) International application number: PCT/KR2023/009558
(87) International publication number: WO 2024/010389

(57) **Abstract**

The present disclosure relates to a method for transmitting beam prediction report information to a network by a UE. Specifically, the method comprises the steps of: predicting and calculating first beam information for a first time point and second beam information for a second time point; encoding the first beam information and the second beam information to configure beam prediction report information; and transmitting the beam prediction report information to a network, wherein: each of the first beam information and at least one piece of the second beam information includes information on the 1st best beam and the 2nd best beam; a measurement value of the 1st best beam included in the first beam information is greater than a measurement value of the 1st best beam included in the second beam information; and the beam prediction report information includes information on an absolute value of the measurement value of the 1st best beam included in the first beam information, a first difference value compared to the absolute value of the measurement value of the 2nd best beam included in the first beam information, a second difference value compared to the absolute value of the measurement value of the 1st best beam included in the second beam information, and a third difference value compared to the second difference value of the measurement value of the 2nd best beam included in the second beam information.

## Description

### TECHNICAL FIELD

The present disclosure relates to a wireless communication system. More particularly, the disclosure relates to a method of transmitting a beam prediction report in a wireless communication system and device therefor.

### BACKGROUND

Wireless communication systems are being widely deployed to provide various types of communication services such as voice and data. In general, a wireless communication system is a multiple access system that can support communication with multiple users by sharing available system resources (bandwidth, transmission power, etc.). Examples of multiple access systems include code division multiple access (CDMA) systems, frequency division multiple access (FDMA) systems, time division multiple access (TDMA) systems, orthogonal frequency division multiple access (OFDMA) systems, and single carrier frequency division multiple access (SC-FDMA) systems.

### DISCLOSURE

### TECHNICAL PROBLEM

Hereinafter, a method of transmitting a beam prediction report in a wireless communication system and device therefor will be described based on the above discussion.

It will be appreciated by those of ordinary skill in the art to which the embodiment(s) pertain that the objects that could be achieved with the embodiment(s) are not limited to what has been particularly described hereinabove and the above and other objects will be more clearly understood from the following detailed description.

### TECHNICAL SOLUTION

In an aspect of the present disclosure, provided herein is a method of performing beam prediction reporting by a user equipment (UE) in a wireless communication system. The method includes: predicting and calculating first beam information related to a first time point and second beam information related to a second time point; configuring beam prediction reporting information by encoding the first beam information and the second beam information; and transmitting the beam prediction reporting information to a network. Each of the first beam information and at least one piece of the second beam information includes information on a first best beam and a second best beam. A measurement for the first best beam included in the first beam information is greater than a measurement for the first best beam included in the second beam information. The beam prediction reporting information includes: information on an absolute value of the measurement for the first best beam included in the first beam information; information on a first difference value of a measurement for the second best beam included in the first beam information relative to the absolute value; information on a second difference value of a measurement for the first best beam included in the second beam information relative to the absolute value; and information on a third difference value of a measurement for the second best beam included in the second beam information relative to the second difference value.

In another aspect of the present disclosure, provided herein is a UE in a wireless communication system. The UE includes: at least one transceiver; at least one processor; and at least one computer memory operably connected to the at least one processor and storing instructions that, when executed, cause the at least one processor to perform operations. The operations include: predicting and calculating first beam information related to a first time point and second beam information related to a second time point; configuring beam prediction reporting information by encoding the first beam information and the second beam information; and transmitting the beam prediction reporting information to a network. Each of the first beam information and at least one piece of the second beam information includes information on a first best beam and a second best beam. A measurement for the first best beam included in the first beam information is greater than a measurement for the first best beam included in the second beam information. The beam prediction reporting information includes: information on an absolute value of the measurement for the first best beam included in the first beam information; information on a first difference value of a measurement for the second best beam included in the first beam information relative to the absolute value; information on a second difference value of a measurement for the first best beam included in the second beam information relative to the absolute value; and information on a third difference value of a measurement for the second best beam included in the second beam information relative to the second difference value.

In another aspect of the present disclosure, provided herein is a processing device in a wireless communication system. The processing device includes: at least one processor; and at least one computer memory operably connected to the at least one processor and storing instructions that, when executed, cause the at least one processor to perform operations. The operations include: predicting and calculating first beam information related to a first time point and second beam information related to a second time point; configuring beam prediction reporting information by encoding the first beam information and the second beam information; and transmitting the beam prediction reporting information to a network. Each of the first beam information and at least one piece of the second beam information includes information on a first best beam and a second best beam. A measurement for the first best beam included in the first beam information is greater than a measurement for the first best beam included in the second beam information. The beam prediction reporting information includes: information on an absolute value of the measurement for the first best beam included in the first beam information; information on a first difference value of a measurement for the second best beam included in the first beam information relative to the absolute value; information on a second difference value of a measurement for the first best beam included in the second beam information relative to the absolute value; and information on a third difference value of a measurement for the second best beam included in the second beam information relative to the second difference value.

In another aspect of the present disclosure, provided herein is a computer-readable storage medium. The computer-readable storage medium stores at least one computer program including instructions that, when executed by at least one processor, cause the at least one processor to perform operations for a UE. The operations include: predicting and calculating first beam information related to a first time point and second beam information related to a second time point; configuring beam prediction reporting information by encoding the first beam information and the second beam information; and transmitting the beam prediction reporting information to a network. Each of the first beam information and at least one piece of the second beam information includes information on a first best beam and a second best beam. A measurement for the first best beam included in the first beam information is greater than a measurement for the first best beam included in the second beam information. The beam prediction reporting information includes: information on an absolute value of the measurement for the first best beam included in the first beam information; information on a first difference value of a measurement for the second best beam included in the first beam information relative to the absolute value; information on a second difference value of a measurement for the first best beam included in the second beam information relative to the absolute value; and information on a third difference value of a measurement for the second best beam included in the second beam information relative to the second difference value.

In another aspect of the present disclosure, provided herein is a method of receiving, by a base station (BS), beam prediction reporting information from a UE. The method includes: receiving the beam prediction reporting information from the UE; and decoding first beam information related to a first time point included in the beam prediction reporting information and second beam information related to a second time point included in the beam prediction reporting information to obtain the first beam information and the second beam information. Each of the first beam information and at least one piece of the second beam information includes information on a first best beam and a second best beam. A measurement for the first best beam included in the first beam information is greater than a measurement for the first best beam included in the second beam information. The first beam information includes: information on an absolute value of the measurement for the first best beam included in the first beam information; and information on a first difference value of a measurement for the second best beam included in the first beam information relative to the absolute value. The second beam information includes: information on a second difference value of a measurement for the first best beam included in the second beam information relative to the absolute value; and information on a third difference value of a measurement for the second best beam included in the second beam information relative to the second difference value.

In a further aspect of the present disclosure, provided herein is a BS in a wireless communication system. The BS includes: at least one transceiver; at least one processor; and at least one computer memory operably connected to the at least one processor and storing instructions that, when executed, cause the at least one processor to perform operations. The operations include: receiving the beam prediction reporting information from the UE; and decoding first beam information related to a first time point included in the beam prediction reporting information and second beam information related to a second time point included in the beam prediction reporting information to obtain the first beam information and the second beam information. Each of the first beam information and at least one piece of the second beam information includes information on a first best beam and a second best beam. A measurement for the first best beam included in the first beam information is greater than a measurement for the first best beam included in the second beam information. The first beam information includes: information on an absolute value of the measurement for the first best beam included in the first beam information; and information on a first difference value of a measurement for the second best beam included in the first beam information relative to the absolute value. The second beam information includes: information on a second difference value of a measurement for the first best beam included in the second beam information relative to the absolute value; and information on a third difference value of a measurement for the second best beam included in the second beam information relative to the second difference value.

In each aspect of the present disclosure, the beam prediction reporting information may be structured in an order of the absolute value, the first difference value, the second difference value, and the third difference value.

In each aspect of the present disclosure, the beam prediction reporting information may be structured in an order of the absolute value, the second difference value, the first difference value, and the third difference value.

In each aspect of the present disclosure, a bit size used to encode the second difference value may be different from a bit size used to encode the first difference value and a bit size used to encode the third difference value.

In each aspect of the present disclosure, the first difference value to the third difference value may be encoded with a same bit size. An interval between codewords obtained by encoding the second difference value may be different from an interval between codewords obtained by encoding the first difference value and an interval between codewords obtained by encoding the third difference value.

In each aspect of the present disclosure, the first time point may be a current time or a future time, and the second time point may be a future time.

The above solutions are only some of the examples of the disclosure, and various examples reflecting the technical features of the disclosure may be derived and understood from the following detailed description by those skilled in the art.

### ADVANTAGEOUS EFFECTS

According to the disclosure, wireless signal transmission and reception may be efficiently performed in a wireless communication system.

It will be appreciated by persons skilled in the art that the technical effects that could be achieved with the disclosure are not limited to what has been particularly described hereinabove and the above and other technical effects that the disclosure could achieve will be more clearly understood from the following detailed description.

### BRIEF DESCRIPTION OF THE DRAWINGS

The accompanying drawings are provided to help understanding of the embodiment, along with a detailed description. However, the technical features of the embodiment are not limited to a specific drawing, and features disclosed in each drawing may be combined with each other to constitute a new embodiment. Reference numerals in each drawing denote structural elements:
FIG. 1 illustrates physical channels used in a 3rd generation partnership project (3GPP) system, which is an example of wireless communication systems, and a general signal transmission method using the same.
FIG. 2 illustrates a radio frame structure.
FIG. 3 illustrates a resource grid of a slot.
FIG. 4 illustrates exemplary mapping of physical channels in a slot;
FIG. 5 illustrates an exemplary process of transmitting a physical downlink shared channel (PDSCH) and an acknowledgment/negative acknowledgment (ACK/NACK).
FIG. 6 illustrates an exemplary physical uplink shared channel (PUSCH) transmission process.
FIG. 7 shows an example of a channel state information (CSI) related procedure.
FIG. 8 is a view for explaining a concept of artificial intelligence/machine learning (AI/ML)/deep learning.
FIGS. 9 to 12 show various AI/ML models of deep learning.
FIG. 13 is a diagram for explaining a framework for 3GPP radio access network (RAN) intelligence.
FIG. 14 illustrates a flowchart in which a user equipment (UE) performs beam prediction reporting according to an embodiment of the present disclosure.
FIG. 15 illustrates a flowchart in which a base station (BS) receives a beam prediction report from a UE according to an embodiment of the present disclosure.
FIG. 16 to FIG. 19 illustrate a communication system (1) and a wireless device applicable to the disclosure.

### DETAILED DESCRIPTION

Techniques described herein may be used in various wireless access systems such as code division multiple access (CDMA), frequency division multiple access (FDMA), time division multiple access (TDMA), orthogonal frequency division multiple access (OFDMA), single carrier-frequency division multiple access (SC-FDMA), etc. CDMA may be implemented as a radio technology such as universal terrestrial radio access (UTRA) or CDMA2000. TDMA may be implemented as a radio technology such as global system for mobile communications (GSM)/general packet radio service (GPRS)/Enhanced Data Rates for GSM Evolution (EDGE). OFDMA may be implemented as a radio technology such as IEEE 802.11 (Wi-Fi), IEEE 802.16 (WiMAX), IEEE 802.20, evolved-UTRA (E-UTRA) etc. UTRA is a part of universal mobile telecommunications system (UMTS). 3rd generation partnership project (3GPP) LTE is a part of Evolved UMTS (E-UMTS) using E-UTRA. 3GPP LTE employs OFDMA for downlink and SC-FDMA for uplink. LTE-A is an evolution of 3GPP LTE. 3GPP NR (New Radio or New Radio Access Technology) is an evolved version of 3GPP LTE/LTE-A/LTE-A pro.

As more and more communication devices require larger communication capacities in transmitting and receiving signals, there is a need for mobile broadband communication improved from the legacy radio access technology. Accordingly, communication systems considering services/UEs sensitive to reliability and latency are under discussion. A next-generation radio access technology in consideration of enhanced mobile broadband communication, massive Machine Type Communication (MTC), and Ultra-Reliable and Low Latency Communication (URLLC) may be referred to as new radio access technology (RAT) or new radio (NR).

While the disclosure is described mainly in the context of 3GPP NR for clarity of description, the technical idea of the disclosure is not limited to 3GPP NR.

In the specification, the expression "setting" may be replaced with the expression "configure/configuration", and the two may be used interchangeably. In addition, conditional expressions (e.g., "if ~~", "in a case ~~", "when ~~", or the like) may be replaced with the expression "based on that ~~" or "in a state/status ~~". Further, an operation of a user equipment (UE)/base station (BS) or an SW/HW configuration according to the satisfaction of the condition may be inferred/understood. Further, when a process of a receiving (or transmitting) side may be inferred/understood from a process of the transmitting (or receiving) side in signal transmission/reception between wireless communication devices (e.g., a BS and a UE), its description may be omitted. For example, signal determination/generation/encoding/transmission on the transmitting side may be understood as signal monitoring reception/decoding/determination on the receiving side. In addition, when it is said that a UE performs (or does not perform) a specific operation, this may also be interpreted as meaning that a BS operates expecting/assuming that the UE performs the specific operation (or expecting/assuming that the UE does not perform the specific operation). In addition, when it is said that a BS performs (or does not perform) a specific operation, this may also be interpreted as meaning that a UE operates expecting/assuming that the BS performs the specific operation (or expecting/assuming that the BS does not perform the specific operation). In addition, the identification and index of each section, embodiment, example, option, method, plan, or the like in the following description are for the convenience of description, and should not be interpreted as meaning that each forms an independent disclosure or that each should be implemented individually. In addition, unless there is an explicitly conflicting/opposing description in describing each section, embodiment, example, option, method, plan, or the like, it may be inferred/interpreted as meaning that at least some of them may be implemented together in combination, or they may be implemented with at least some of them omitted.

In a wireless communication system, a UE receives information through downlink (DL) from a BS and transmit information to the BS through uplink (UL). The information transmitted and received by the BS and the UE includes data and various control information and includes various physical channels according to type/usage of the information transmitted and received by the UE and the BS.

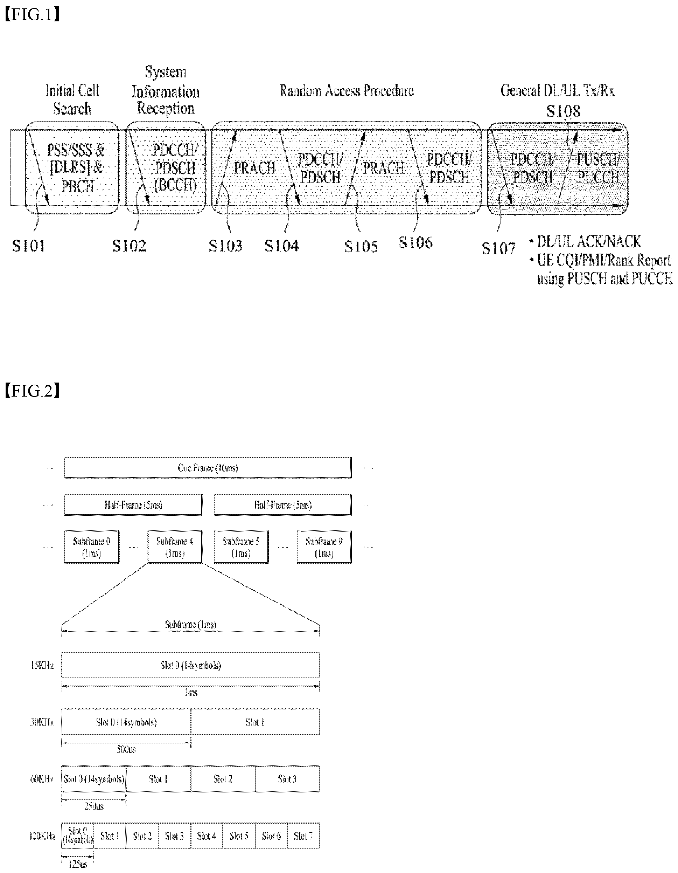

FIG. 1 is a diagram illustrating physical channels and a signal transmission method using the physical channels, in 3GPP NR system.

When powered on or when a UE initially enters a cell, the UE performs initial cell search involving synchronization with a BS in step S101. For initial cell search, the UE receives a synchronization signal block (SSB). The SSB includes a primary synchronization signal (PSS), a secondary synchronization signal (SSS), and a physical broadcast channel (PBCH). The UE synchronizes with the BS and acquires information such as a cell Identifier (ID) based on the PSS/SSS. Then the UE may receive broadcast information from the cell on the PBCH. In the meantime, the UE may check a downlink channel status by receiving a downlink reference signal (DL RS) during initial cell search.

After initial cell search, the UE may acquire more specific system information by receiving a physical downlink control channel (PDCCH) and receiving a physical downlink shared channel (PDSCH) based on information of the PDCCH in step S102.

Subsequently, to complete connection to the eNB, the UE may perform a random access procedure with the eNB (S103 to S106). In the random access procedure, the UE may transmit a preamble on a physical random access channel (PRACH) (S103) and may receive a PDCCH and a random access response (RAR) for the preamble on a PDSCH associated with the PDCCH (S104). The UE may transmit a physical uplink shared channel (PUSCH) by using scheduling information in the RAR (S105), and perform a contention resolution procedure including reception of a PDCCH signal and a PDSCH signal corresponding to the PDCCH signal (S106).

After the above procedure, the UE may receive a PDCCH and/or a PDSCH from the eNB (S107) and transmit a Physical Uplink Shared Channel (PUSCH) and/or a Physical Uplink Control Channel (PUCCH) to the eNB (S108), which is a general DL and UL signal transmission procedure. Particularly, the UE receives Downlink Control Information (DCI) on a PDCCH. Control information transmitted from a UE to an eNB is collectively referred to as uplink control information (UCI). The UCI includes a hybrid automatic repeat and request acknowledgement/negative-acknowledgment (HARQ ACK/NACK), a scheduling request (SR), channel state information (CSI), and so on. The CSI includes a channel quality indicator (CQI), a precoding matrix indicator (PMI), a rank indication (RI), and so on. Although the UCI is generally transmitted through a PUCCH, it may be transmitted through a PUSCH, when control information and traffic data should be transmitted simultaneously. In addition, the UCI may be transmitted aperiodically through a PUSCH by a request/indication of the network.

FIG. 2 illustrates the structure of a radio frame. The radio frame may be used for UL transmission and DL transmission in NR. A radio frame is 10 ms in length and may be defined by two 5-ms half-frames. An HF may include five 1-ms subframes. A subframe may be divided into one or more slots, and the number of slots in an SF may be determined according to a subcarrier spacing (SCS). Each slot may include 12 or 14 OFDM(A) symbols according to a cyclic prefix (CP). In a normal CP (NCP) case, each slot may include 14 symbols, whereas in an extended CP (ECP) case, each slot may include 12 symbols. Herein, a symbol may be an OFDM symbol (or CP-OFDM symbol) or an SC-FDMA symbol (or DFT-s-OFDM symbol).

Table 1 below lists the number of symbols per slot N^{slot}_{symb}, the number of slots per frame *N^{frame,u}ₛₗₒₜ,* and the number of slots per subframe *N^{subframe,u}ₛₗₒₜ* according to an SCS configuration µ in the NCP case.

**[Table 1]**

| *u* | *N*^{slot}_{symb} | *N*^{frame,u}ₛₗₒₜ | *N*^{subframe,u}ₛₗₒₜ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

Table 2 below lists the number of symbols per slot N^{slot}_{symb}, the number of slots per frame *N^{frame,u}ₛₗₒₜ,* and the number of slots per subframe *N^{subframe,u}ₛₗₒₜ* according to an SCS configuration µ in the ECP case.

**[Table 2]**

| *u* | *N*^{slot}_{symb} | *N*^{frame,u}ₛₗₒₜ | *N*^{subframe,u}ₛₗₒₜ |
|---|---|---|---|
| 2 | 12 | 40 | 4 |

The structure of the frame is merely an example. The number of subframes, the number of slots, and the number of symbols in a frame may vary.

In the NR system, OFDM numerology (e.g., SCS) may be configured differently for a plurality of cells aggregated for one UE. Accordingly, the (absolute time) duration of a time resource (e.g., an SF, a slot or a TTI) (for simplicity, referred to as a time unit (TU)) consisting of the same number of symbols may be configured differently among the aggregated cells. Here, the symbols may include an OFDM symbol (or a CP-OFDM symbol) and an SC-FDMA symbol (or a discrete Fourier transform-spread-OFDM (DFT-s-OFDM) symbol).

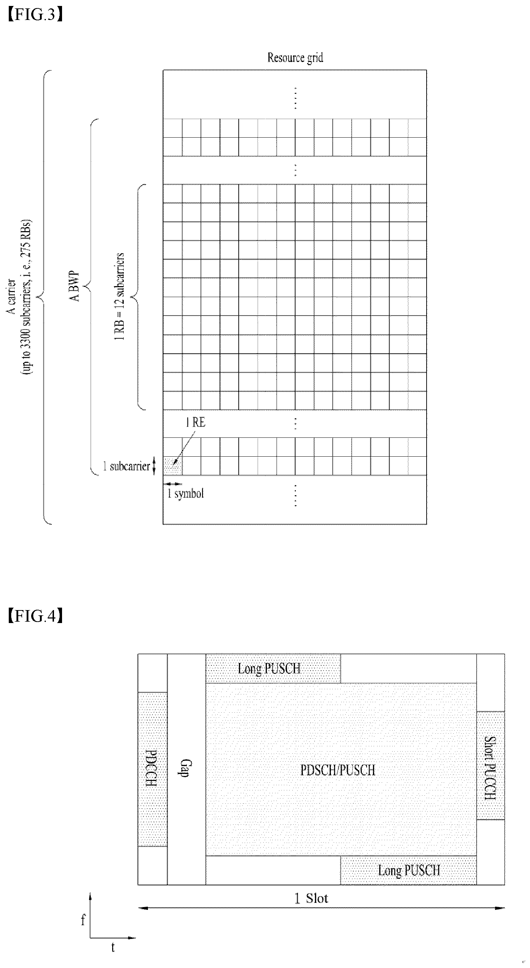

FIG. 3 illustrates an exemplary resource grid for the duration of a slot. A slot includes a plurality of symbols in the time domain. For example, one slot includes 14 symbols in a normal CP case, whereas one slot includes 12 symbols in an extended CP case. A carrier includes a plurality of subcarriers in the frequency domain. A resource block (RB) is defined as a plurality of (e.g., 12) contiguous subcarriers in the frequency domain. A bandwidth part (BWP) may be defined as a plurality of physical RBs (PRBs) in the frequency domain, and correspond to one numerology (e.g., an SCS, a CP length, or the like). A carrier may include up to N (e.g., 5) BWPs. Data communication may be performed in an active BWP, and only one BWP may be activated for one UE. Each element of a resource grid may be referred to as a resource element (RE) and mapped to one complex symbol.

FIG. 4 illustrates an example of mapping physical channels in a slot. A PDCCH may be transmitted in a DL control region, and a PDSCH may be transmitted in a DL data region. A PUCCH may be transmitted in a UL control region, and a PUSCH may be transmitted in a UL data region. A GP provides a time gap for switching from a transmission mode to a reception mode or switching from the reception mode to the transmission mode at the BS and the UE. Some symbols at a DL-to-UL switching time point within a subframe may be configured as a GP.

Each physical channel is described below in more detail.

The PDCCH delivers DCI. For example, the PDCCH (i.e., DCI) may carry information about a transport format and resource allocation of a DL shared channel (DL-SCH), resource allocation information of an uplink shared channel (UL-SCH), paging information on a paging channel (PCH), system information on the DL-SCH, information on resource allocation of a higher-layer control message such as an RAR transmitted on a PDSCH, a transmit power control command, information about activation/release of configured scheduling, and so on. The DCI includes a cyclic redundancy check (CRC). The CRC is masked with various identifiers (IDs) (e.g. a radio network temporary identifier (RNTI)) according to an owner or usage of the PDCCH. For example, if the PDCCH is for a specific UE, the CRC is masked by a UE ID (e.g., cell-RNTI (C-RNTI)). If the PDCCH is for a paging message, the CRC is masked by a paging-RNTI (P-RNTI). If the PDCCH is for system information (e.g., a system information block (SIB)), the CRC is masked by a system information RNTI (SI-RNTI). When the PDCCH is for an RAR, the CRC is masked by a random access-RNTI (RA-RNTI).

The PDCCH includes 1, 2, 4, 8, or 16 control channel elements (CCEs) according to an aggregation level (AL). A CCE is a logical allocation unit used to provide a PDCCH with a specific code rate according to a wireless channel state. A CCE includes six resource element groups (REGs). An REG is defined as one OFDM symbol and one (P)RB. The PDCCH is transmitted in a control resource set (CORESET). A CORESET is defined as an REG set having a given numerology (e.g., an SCS, a CP length, and so on). A plurality of CORESETs for one UE may overlap with each other in the time/frequency domain. The CORESET may be configured by system information (e.g., a master information block (MIB)) or UE-specific higher layer (e.g., radio resource control (RRC) layer) signaling. Specifically, the number of RBs and the number (up to 3) of OFDM symbols included in the CORESET may be configured by higher layer signaling.

For PDCCH reception/detection, the UE monitors PDCCH candidates. A PDCCH candidate represents CCE(s) that the UE should monitor for PDCCH detection. Each PDCCH candidate is defined as 1, 2, 4, 8, or 16 CCEs according to an AL. The monitoring includes (blind) decoding of the PDCCH candidates. A set of PDCCH candidates that the UE monitors are defined as a PDCCH search space (SS). The SS includes a common search space (CSS) or a UE-specific search space (USS). The UE may acquire DCI by monitoring PDCCH candidates in one or more SSs configured by an MIB or higher layer signaling. Each CORESET is associated with one or more SSs, and each SS is associated with one COREST. The SS may be defined based on the following parameters.
- controlResourceSetId: Indicates a CORESET associated with the SS
- monitoringSlotPeriodicityAndOffset: Indicates a PDCCH monitoring periodicity (in slots) and a PDCCH monitoring period offset (in slots)
- monitoringSymbolsWithinSlot: Indicates PDCCH monitoring symbols (e.g., the first symbol(s) of the CORESET) within the slot
- nrofCandidates: AL={1, 2, 4, 8, 16} indicates the number of PDCCH candidates (one of 0, 1, 2, 3, 4, 5, 6, and 8)
   * An occasion (e.g., time/frequency resources) in which the PDCCH candidates are to be monitored is defined as a PDCCH (monitoring) occasion. One or more PDCCH (monitoring) occasions may be configured within a slot.

Table 3 illustrates characteristics of each SS type.

**[Table 3]**

| Type | Search Space | RNTI | Use Case |
|---|---|---|---|
| Type0-PDCCH | Common | SI-RNTI on a primary cell | SIB Decoding |
| Type0A-PDCCH | Common | SI-RNTI on a primary cell | SIB Decoding |
| Type1-PDCCH | Common | RA-RNTI or TC-RNTI on a primary cell | Msg2, Msg4 decoding in RACH |
| Type2-PDCCH | Common | P-RNTI on a primary cell | Paging Decoding |
| Type3-PDCCH | Common | INT-RNTI, SFI-RNTI, TPC-PUSCH-RNTI, TPC-PUCCH-RNTI, TPC-SRS-RNTI, C-RNTI, MCS-C-RNTI, or CS-RNTI(s) | |
| UE Specific | UE Specific | C-RNTI, or MCS-C-RNTI, or CS-RNTI(s) | User specific PDSCH decoding |

Table 4 shows DCI formats transmitted on the PDCCH.

**[Table 4]**

| DCI format | Usage |
|---|---|
| 0_0 | Scheduling of PUSCH in one cell |
| 0_1 | Scheduling of PUSCH in one cell |
| 1_0 | Scheduling of PDSCH in one cell |
| 1_1 | Scheduling of PDSCH in one cell |
| 2_0 | Notifying a group of UEs of the slot format |
| 2_1 | Notifying a group of UEs of the PRB(s) and OFDM symbol(s) where UE may assume no transmission is intended for the UE |
| 2_2 | Transmission of TPC commands for PUCCH and PUSCH |
| 2_3 | Transmission of a group of TPC commands for SRS transmissions by one or more UEs |

DCI format 0_0 may be used to schedule a TB-based (or TB-level) PUSCH, and DCI format 0_1 may be used to schedule a TB-based (or TB-level) PUSCH or a code block group (CBG)-based (or CBG-level) PUSCH. DCI format 1_0 may be used to schedule a TB-based (or TB-level) PDSCH, and DCI format 1_1 may be used to schedule a TB-based (or TB-level) PDSCH or a CBG-based (or CBG-level) PDSCH (DL grant DCI). DCI format 0_0/0_1 may be referred to as UL grant DCI or UL scheduling information, and DCI format 1_0/1_1 may be referred to as DL grant DCI or DL scheduling information. DCI format 2_0 is used to deliver dynamic slot format information (e.g., dynamic SFI) to the UE, and DCI format 2_1 may be used to deliver DL pre-emption information to the UE. DCI format 2_0 and/or DCI format 2_1 may be transmitted to UEs within a group through a group common PDCCH, which is a PDCCH delivered to UEs defined as a group.

DCI format 0_0 and DCI format 1_0 may be referred to as fallback DCI formats, whereas DCI format 0_1 and DCI format 1_1 may be referred to as non-fallback DCI formats. In the fallback DCI formats, a DCI size/field configuration is maintained to be the same irrespective of a UE configuration. In contrast, the DCI size/field configuration varies depending on a UE configuration in the non-fallback DCI formats.

The PDSCH carries DL data (e.g., a DL-SCH transport block (DL-SCH TB)), and modulation schemes such as quadrature phase shift keying (QPSK), 16 quadrature amplitude modulation (16 QAM), 64 QAM, 256 QAM, or the like is applied to the PDSCH. A TB is encoded to generate a codeword. The PDSCH may carry up to two codewords. Each codeword may be subject to scrambling and modulation mapping, and modulation symbols generated from the codeword may be mapped to one or more layers. Each layer is mapped to resources along with a demodulation reference signal (DMRS)), generated as an OFDM symbol signal, and transmitted through a corresponding antenna port.

The PUCCH carries UCI. The UCI includes the following.
- SR (Scheduling Request): Information used to request UL-SCH resources
- HARQ(Hybrid Automatic Repeat reQuest)-ACK(Acknowledgement): A response to a DL data packet (e.g., codeword) on a PDSCH. This indicates whether the DL data packet has been successfully received. One HARQ-ACK bit may be transmitted in response to a single codeword, and two HARQ-ACK bits may be transmitted in response to two codewords. The HARQ-ACK response includes a positive ACK (simply, ACK), a negative ACK (NACK), DTX, or NACK/DTX. HARQ-ACK is used interchangeably with HARQ ACK/NACK and ACK/NACK.
- CSI (Channel State Information): Feedback information for a DL channel. Multiple input multiple output (MIMO)-related feedback information includes an RI and a PMI.

Table 5 illustrates an example of PUCCH formats. Depending on PUCCH transmission durations, they may be classified into short PUCCH (Formats 0 and 2) and long PUCCH (Formats 1, 3 and 4).

**[Table 5]**

| PUCC H format | Length in OFDM symbols NPUCCHsym b | Number of bits | Usage | Etc |
|---|---|---|---|---|
| 0 | 1-2 | ≤2 | HARQ, SR | Sequence selection |
| 1 | 4-14 | ≤2 | HARQ, [SR] | Sequence modulation |
| 2 | 1-2 | >2 | HARQ, CSI, [SR] | CP-OFDM |
| 3 | 4-14 | >2 | HARQ, CSI, [SR] | DFT-s-OFDM (no UE multiplexing) |
| 4 | 4-14 | >2 | HARQ, CSI, [SR] | DFT-s-OFDM (Pre DFT OCC) |

PUCCH format 0 carries UCI of up to 2 bits, and is mapped to and transmitted based on a sequence. Specifically, the UE transmits one of a plurality of sequences through a PUCCH of PUCCH format 0 to transmit specific UCI to the BS. The UE transmits the PUCCH of PUCCH format 0 in PUCCH resources for a corresponding SR configuration, only when transmitting a positive SR.

PUCCH format 1 carries UCI of up to 2 bits, and modulation symbols are spread with an orthogonal cover code (OCC) (which is configured differently depending on whether frequency hopping is performed) in the time domain. A DMRS is transmitted in a symbol which does not carry modulation symbols (i.e., transmitted in time division multiplexing (TDM)).

PUCCH format 2 carries UCI of more than two bits, and modulation symbols are transmitted with a DMRS in frequency division multiplexing (FDM). The DMRS is located in symbol indexes #1, #4, #7 and #10 within a given RB with a density of 1/3. A pseudo noise (PN) sequence is used for a DMRS sequence. Frequency hopping may be activated for 2-symbol PUCCH format 2.

In PUCCH format 3, UEs are not multiplexed within the same PRB, and UCI with more than two bits is delivered. In other words, PUCCH resources of PUCCH format 3 do not include an OCC. A modulation symbol is transmitted with a DMRS in TDM.

PUCCH format 4 supports multiplexing of up to four UEs within the same physical RS and carries UCI with more than two bits. In other words, PUCCH resources of PUCCH format 3 include an OCC. A modulation symbol is transmitted with a DMRS in TDM.

At least one of one or more cells configured for the UE may be configured for PUCCH transmission. At least a primary cell may be configured as a cell for the PUCCH transmission. At least one PUCCH cell group may be configured for the UE based on the at least one cell configured for the PUCCH transmission, and each PUCCH cell group includes one or more cells. A PUCCH cell group may be simply referred to as a PUCCH group. The PUCCH transmission may be configured not only for the primary cell but also for an SCell, and the primary cell belongs to a primary PUCCH group, while the PUCCH-SCell configured for the PUCCH transmission belongs to a secondary PUCCH group. A PUCCH on the primary cell may be used for cells belonging to the primary PUCCH group, and a PUCCH on the PUCCH-SCell may be used for cells belonging to the secondary PUCCH group.

The PUSCH carries UL data (e.g., a UL-SCH TB) and/or UCI, and is transmitted based on a cyclic prefix-orthogonal frequency division multiplexing (CP-OFDM) waveform or a discrete Fourier transform-spread-orthogonal frequency division multiplexing (DFT-s-OFDM) waveform. When the PUSCH is transmitted based on the DFT-s-OFDM waveform, the UE transmits the PUSCH by applying transform precoding. For example, when transform precoding is impossible (e.g., transform precoding is disabled), the UE may transmit the PUSCH based on the CP-OFDM waveform, and when transform precoding is possible (e.g., transform precoding is enabled), the UE may transmit the PUSCH based on the CP-OFDM waveform or the DFT-s-OFDM waveform. PUSCH transmission may be dynamically scheduled by a UL grant in DCI or semi-statically scheduled based on higher layer (e.g. RRC) signaling (and/or layer 1 (L1) signaling (e.g. a PDCCH)). PUSCH transmission may be performed in a codebook-based or non-codebook-based manner.

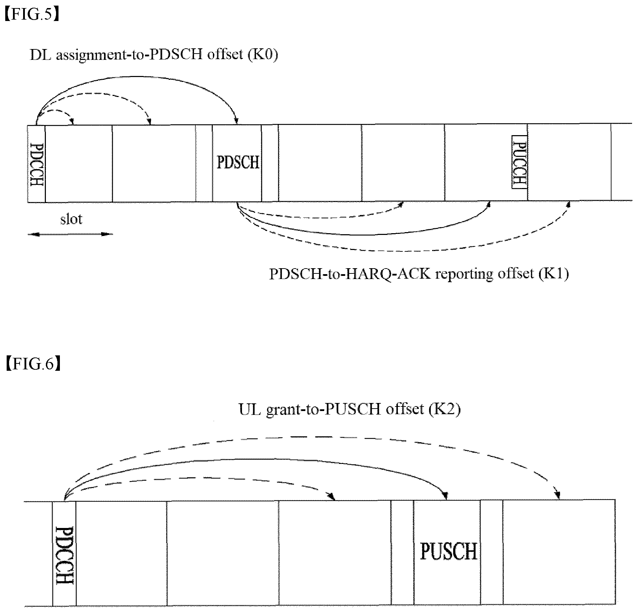

FIG. 5 illustrates an ACK/NACK transmission process. Referring to FIG. 5, the UE may detect a PDCCH in slot #n. The PDCCH includes DL scheduling information (e.g., DCI format 1_0 or DCI format 1_1). The PDCCH indicates a DL assignment-to-PDSCH offset, K0 and a PDSCH-to-HARQ-ACK reporting offset, K1. For example, DCI format 1_0 or DCI format 1_1 may include the following information.
- Frequency domain resource assignment: Indicates an RB set assigned to a PDSCH.
- Time domain resource assignment: Indicates K0 (e.g., a slot offset), the starting position (e.g., OFDM symbol index) of a PDSCH in slot #n+K0, and the length (e.g., the number of OFDM symbols) of the PDSCH
- PDSCH-to-HARQ_feedback timing indicator: Indicates K1.
- HARQ process number (4 bits): Indicates HARQ process identify (ID) for data (e.g., PDSCH or TB)
- PUCCH resource indicator (PRI): Indicates a PUCCH resource to be used for UCI transmission among a plurality of PUCCH resources in a PUCCH resource set

Subsequently, the UE may receive a PDSCH from slot #(n+K0) according to scheduling information in slot #n. Upon completion of the PDSCH reception in slot #n1 (where n+K0≤ n1), the UE may transmit UCI through a PUCCH in slot #(n1+K1). The UCI may include a HARQ-ACK response to the PDSCH. In FIG. 5, it is assumed for convenience that an SCS for the PDSCH and an SCS for the PUCCH are the same and slot# n1 = slot# n+K0, to which the disclosure is not limited. When the SCSs are different, K1 may be indicated/interpreted based on the SCS of the PUCCH.

When the PDSCH is configured to transmit up to one TB, the HARQ-ACK response may include one bit. When the PDSCH is configured to transmit up to two TBs, the HARQ-ACK response may include two bits in the case of not configuring spatial bundling, and include one bit in the case of configuring spatial bundling. When a HARQ-ACK transmission time for a plurality of PDSCHs is specified as slot #(n+K1), the UCI transmitted in slot #(n+K1) includes HARQ-ACK responses for the plurality of PDSCHs.

Whether the UE should perform spatial bundling for a HARQ-ACK response may be configured (e.g., by RRC/higher layer signaling) for each cell group. For example, spatial bundling may be individually configured for each HARQ-ACK response transmitted through a PUCCH and/or each HARQ-ACK response transmitted through a PUSCH.

When the maximum number of TBs (or codewords) receivable at one time (or schedulable by one DCI) in a corresponding serving cell is 2 (or larger) (e.g., when a higher layer parameter maxNrofCodeWordsScheduledByDCI corresponds to 2 TBs), spatial bundling may be supported. Meanwhile, more than 4 layers may be used for 2-TB transmission, and up to 4 layers may be used for 1-TB transmission. Consequently, when spatial bundling is configured for a corresponding cell group, spatial bundling may be performed for a serving cell for which more than 4 layers are schedulable among the serving cells of the cell group. On the serving cell, the UE that wants to transmit a HARQ-ACK response through spatial bundling may generate the HARQ-ACK response by performing a bitwise logical AND operation on A/N bits for a plurality of TBs.

For example, on the assumption that the UE receives DCI scheduling two TBs and receives the two TBs through a PDSCH based on the DCI, the UE performing spatial bundling may generate a single A/N bit by performing a logical AND operation on a first A/N bit for a first TB and a second A/N bit for a second TB. As a result, when both the first TB and the second TB are ACKs, the UE reports an ACK bit value to the BS, and when any one of the TBs is a NACK, the UE reports a NACK bit value to the BS.

For example, when only one TB is actually scheduled in a serving cell configured to receive two TBs, the UE may generate a single A/N bit by performing a logical AND operation on an A/N bit for the one TB and a bit value of 1. As a result, the UE reports the A/N bit for the one TB to the BS as it is.

There are a plurality of parallel DL HARQ processes for DL transmission in the BS/UE. The plurality of parallel HARQ processes allow DL transmission to be performed continuously while the BS waits for a HARQ feedback to successful or unsuccessful reception of a previous DL transmission. Each HARQ process is associated with a HARQ buffer of a medium access control (MAC) layer. Each DL HARQ process manages state variables such as the number of transmissions of a MAC physical data block (PDU) in a buffer, a HARQ feedback for the MAC PDU in the buffer, and a current redundancy version. Each HARQ process is identified by a HARQ process ID.

FIG. 6 illustrates an exemplary PUSCH transmission process. Referring to FIG. 6, the UE may detect a PDCCH in slot #n. The PDCCH may include UL scheduling information (e.g., DCI format 0_0 or DCI format 0_1). DCI format 0_0 and DCI format 0_1 may include the following information.
- Frequency domain resource assignment: Indicates an RB set allocated to a PUSCH.
- Time domain resource assignment: Specifies a slot offset K2 indicating the starting position (e.g., symbol index) and length (e.g., the number of OFDM symbols) of the PUSCH in a slot. The starting symbol and length of the PUSCH may be indicated by a start and length indicator value (SLIV), or separately.

The UE may then transmit a PUSCH in slot #(n+K2) according to the scheduling information in slot #n. The PUSCH includes a UL-SCH TB.

### CSI related operation

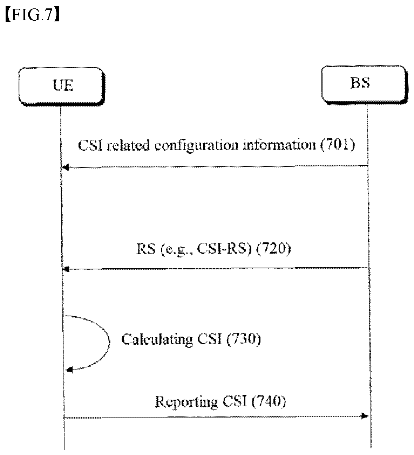

FIG. 7 shows an example of a CSI related procedure.

The UE receives configuration information related to CSI from the BS via RRC signaling (710). The CSI-related configuration information may include at least one of channel state information-interference measurement (CSI-IM)-related information, CSI measurement-related information, CSI resource configuration-related information, CSI-RS resource-related information, or CSI report configuration-related information.
- A CSI-IM resource may be configured for interference measurement (IM) of the UE. In the time domain, the CSI-IM resource set may be configured periodic, semi-persistent, or aperiodic. The CSI-IM resource may be configured to zero power (ZP)-CSI-RS for the UE. ZP-CSI-RS may be configured to be distinguished from non-zero power (NZP)-CSI-RS.
- The UE may assume that CSI-RS resource(s) for channel measurement configured for one CSI reporting and CSI-IM/NZP CSI-RS resource(s) for interference measurement have a QCL relationship with respect to 'QCL-TypeD' for each resource (when NZP CSI-RS resource(s) are used for interference measurement).
- CSI resource configuration may include at least one of a CSI-IM resource for interference measurement, an NZP CSI-RS resource for interference measurement, and an NZP CSI-RS resource for channel measurement. The channel measurement resource (CMR) may be a NZP CSI-RS for CSI acquisition, and the interference measurement resource (IMR) may be an NZP CSI-RS for CSI-IM and IM.
- A CSI-RS may be configured for one or more UEs. Different CSI-RS configurations may be provided for each UE, or the same CSI-RS configuration may be provided to a plurality of UEs. The CSI-RS may support up to 32 antenna ports. CSI-RSs corresponding to N (N being 1 or more) antenna ports may be mapped to N RE locations within a time-frequency unit corresponding to one slot and one RB. When N is 2 or more, N-port CSI-RSs may be multiplexed in CDM, FDM and/or TDM methods. The CSI-RS may be mapped to the remaining REs except for REs to which CORESET, DMRS, and SSB are mapped. In the frequency domain, the CSI-RS may be configured for the entire bandwidth, a partial bandwidth part (BWP), or a partial bandwidth. The CSI-RS may be transmitted in each RB within the bandwidth in which the CSI-RS is configured (i.e., density = 1), or the CSI-RS may be transmitted in every second RB (e.g., even or odd RB) (i.e., density = 1/2). When the CSI-RS is used as a tracking reference signal (TRS), a single-port CSI-RS may be mapped on three subcarriers in each resource block (i.e., density = 3). One or more CSI-RS resource sets may be configured for the UE in the time domain. Each CSI-RS resource set may include one or more CSI-RS configurations. Each CSI-RS resource set may be configured periodic, semi-persistent, or aperiodic.
- The CSI report configuration may include configuration for a feedback type, a measurement resource, a report type, and the like. The NZP-CSI-RS resource set may be used for CSI reporting configuration of a corresponding UE. An NZP-CSI-RS resource set may be associated with the CSI-RS or the SSB. A plurality of periodic NZP-CSI-RS resource sets may be configured as TRS resource sets. (i) The feedback types include a channel quality indicator (CQI), a precoding matrix indicator (PMI), a CSI-RS resource indicator (CRI), an SSB resource block indicator (SSBRI), a layer indicator (LI), a rank indicator (RI), a first layer (L1)-reference signal received strength (RSRP), and the like. (ii) The measurement resource may include configuration for a downlink signal and/or downlink resource on which measurement is performed by the UE to determine feedback information. The measurement resource may be configured as a ZP and/or NZP CSI-RS resource set associated with the CSI report configuration. The NZP CSI-RS resource set may include a CSI-RS set or an SSB set. For example, the L1-RSRP may be measured for a CSI-RS set or for an SSB set. (iii) The report type may include configuration for a time when the UE performs a report and an uplink channel. The reporting time may be configured to be periodic, semi-persistent or aperiodic. The periodic CSI report may be transmitted on a PUCCH. The semi-persistent CSI report may be transmitted on a PUCCH or a PUSCH based on a MAC CE indicating activation/deactivation. The aperiodic CSI report may be indicated by DCI signaling. For example, a CSI request field of an uplink grant may indicate one of various report trigger sizes. The aperiodic CSI report may be transmitted on a PUSCH.

The UE measures CSI based on configuration information related to CSI. The CSI measurement may include receiving the CSI-RS (720) and acquiring the CSI by computing the received CSI-RS (730).

The UE may transmit a CSI report to the BS (740). For the CSI report, the time and frequency resource available to the UE are controlled by the BS. Channel state information (CSI) includes at least one of a channel quality indicator (CQI), a precoding matrix indicator (PMI), a CSI-RS resource indicator (CRI), a SS/PBCH block resource indicator (SSBRI), a layer indicator (LI), a rank indicator (RI), an L1-RSRP, and/or an L-SINR.

A time domain behavior of CSI reporting supports periodic, semi-persistent, aperiodic. i) Periodic CSI reporting is performed in a short PUCCH, a long PUCCH. Periodicity and a slot offset of periodic CSI reporting may be configured by RRC and refers to a CSI-ReportConfig IE. ii) SP (semi-periodic) CSI reporting is performed in a short PUCCH, a long PUCCH, or a PUSCH. For SP CSI in a short/long PUCCH, periodicity and a slot offset are configured by RRC and a CSI report is activated/deactivated by separate MAC CE/DCI. For SP CSI in a PUSCH, periodicity of SP CSI reporting is configured by RRC, but a slot offset is not configured by RRC and SP CSI reporting is activated/deactivated by DCI (format 0_1). For SP CSI reporting in a PUSCH, a separated RNTI (SP-CSI C-RNTI) is used. An initial CSI report timing follows a PUSCH time domain allocation value indicated by DCI and a subsequent CSI report timing follows a periodicity configured by RRC. DCI format 0_1 may include a CSI request field and activate/deactivate a specific configured SP-CSI trigger state. SP CSI reporting has activation/deactivation equal or similar to a mechanism having data transmission in a SPS PUSCH. iii) Aperiodic CSI reporting is performed in a PUSCH and is triggered by DCI. In this case, information related to trigger of aperiodic CSI reporting may be delivered/indicated/configured through MAC-CE. For AP CSI having an AP CSI-RS, AP CSI-RS timing is configured by RRC and timing for AP CSI reporting is dynamically controlled by DCI.

### QCL (quasi-co location)

When the channel properties of an antenna port may be derived from a channel of another antenna port, the two antenna ports are quasi co-located. The channel properties may include one or more of delay spread, Doppler spread, frequency/Doppler shift, average received power, received timing/average delay, and spatial RX parameter.

The UE may be configured with a list of a plurality of TCI-State configurations through a higher layer parameter, PDSCH-Config. Each TCI-State is associated with a QCL configuration parameter between one or two DL RSs and a DMRS port of a PDSCH. QCL may include qcl-Type1 for a first DS RS and qcl-Type2 for a second DL RS. A QCL type may correspond to one of the following types.
- 'QCL-TypeA': {Doppler shift, Doppler spread, average delay, delay spread}
- 'QCL-TypeB': {Doppler shift, Doppler spread}
- 'QCL-TypeC': {Doppler shift, average delay}
- 'QCL-TypeD': {Spatial Rx parameter}

### Beam Management (BM)

BM is a series of processes for acquiring and maintaining a set of BS (or transmission and reception point (TRP)) beams and/or UE beams available for DL and UL transmissions/receptions. BM may include the following processes and terminology.
- Beam measurement: The BS or the UE measures the characteristics of a received beamformed signal.
- Beam determination: The BS or the UE selects its transmission (Tx) beam/reception (Rx) beam.
- Beam sweeping: A spatial domain is covered by using Tx beams and/or Rx beams in a predetermined manner during a predetermined time interval.
- Beam report: The UE reports information about a beamformed signal based on a beam measurement.

The BM process may be divided into (1) a DL BM process using an SSB or a CSI-RS and (2) a UL BM process using a sounding reference signal (SRS). Further, each BM process may include Tx beam sweeping for determining a Tx beam and Rx beam sweeping for determining an Rx beam.

The DL BM process may include (1) transmission of a beamformed DL RS (e.g., a CSI-RS or SSB) from the BS, and (2) beam reporting from the UE.

The beam report may include preferred DL RS ID(s) and reference signal received power (RSRP) corresponding to the DL RS ID(s). A DL RS ID may be an SSB resource indicator (SSBRI) or a CSI-RS resource indicator (CRI).

### Artificial intelligence/machine learning (AI/ML)

With the technological development of AI/ML, node(s) and UE(s) constituting a wireless communication network are becoming intelligent/advanced, and in particular, due to intelligence of a network/BS, it is expected that various network/BS determination parameter values (e.g., transmission and reception power of each BS, transmission power of each UE, precoder/beam of BS/UE, time/frequency resource allocation for each UE, or a duplex method of BS) are rapidly optimized and derived/applied according to various environmental parameters (e.g., distribution/location of BSs, distribution/location/material of building/furniture, location/moving direction/speed of UEs, and climate information). In line with this trend, many standardization organizations (e.g., 3GPP or O-RAN) consider introduction of the network/BS determination parameter values, and research on this is also actively underway.

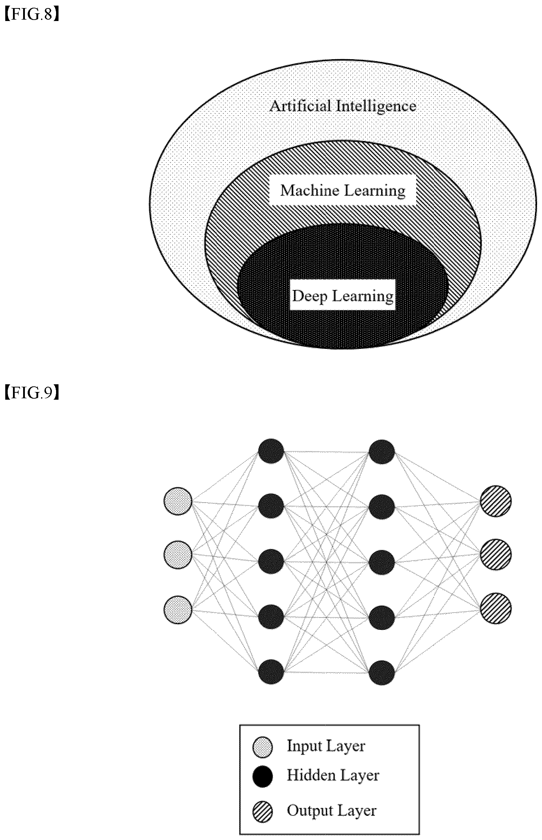

In a narrow sense, AI/ML may be easily referred to as deep learning-based artificial intelligence, but is conceptually shown in FIG. 8.
- Artificial intelligence: This may correspond to all automation by which machines replace a human work.
- Machine learning: Without explicitly programming rules, machines may learn patterns for decision-making on their own from data.
- Deep learning: This is an artificial neural network-based AI/ML model in which a machine performs all at once from unstructured data to feature extraction and determination and an algorithm depends upon a biological nervous system, that is, a multi-layer network of interconnected nodes for feature extraction and transformation inspired by a neural network. A common deep learning network architecture may include deep neural networks (DNNs), recurrent neural networks (RNNs) and convolutional neural networks (CNNs).

### Classification of types of AI/ML according to various references

1. Offline vs Online
   (1) Offline Learning: Offline Learning follows a sequential procedure of data collection, training, and prediction. In other words, collection and training are performed offline, and a completed program is installed on-site for use in prediction tasks. The offline learning approach is used in most situations.
   (2) Online Learning: Online learning refers to a method that incrementally learns with newly generated data to gradually improve performance based on continuous generation of data available for learning through the Internet
2. Classification according to AI/ML Framework concept
   (1) Centralized Learning: When training data collected from a plurality of different nodes is reported to a centralized node, all data resources/storage/learning (e.g., supervised, unsupervised, and reinforcement learning) are performed by one central node.
   (2) Federated Learning: A collective AI/ML model is configured based on data across decentralized data owners. Instead of using data into an AI/ML model, a local node/individual device collects data and a train a copy of the AI/ML model thereof, and thus it is not required to report source data to a central node. In federated learning, a parameter/weight of the AI/ML model may be transmitted back to the centralized node to support general AI/ML model training. An advantage of federated learning includes increased computation speed and superiority in terms of information security. That is, a process of uploading personal data to a central server is unnecessary, and leakage and abuse of personal information may be prevented.
   (3) Distributed Learning: The machine learning process represents a concept that is scaled and deployed across a cluster of nodes. A training AI/ML model is split and shared across multiple nodes operating concurrently to speed up AI/ML model training.
3. Classification according to learning method
   (1) Supervised Learning: Supervised learning is a machine learning task that aims to learn a mapping function from input to output when a labeled data set is given. The input data is called training data and has known labels or outcomes. An example of the supervised learning may include (i) Regression: Linear Regression, Logistic Regression, (ii) Instance-based Algorithms: k-Nearest Neighbor (KNN), (iii) Decision Tree Algorithms: CART, (iv) Support Vector Machines: SVM, (v) Bayesian Algorithms: Naive Bayes, and (vi) Ensemble Algorithms: Extreme Gradient Boosting, Bagging: Random Forest. The supervised learning may be further grouped due to regression and classification problems, and classification predicts a label and regression predicts a quantity.
   (2) Unsupervised Learning: This is a machine learning task that aims to learn a function that describes a hidden structure in unlabeled data. Input data is unlabeled and has no known results. Some examples of unsupervised learning include K-means clustering, principal component analysis (PCA), nonlinear independent component analysis (ICA), and LSTM.
   (3) Reinforcement Learning: In reinforcement learning (RL), an agent aims to optimize a long-term goal by interacting with an environment based on a trial-and-error process, which is goal-oriented learning based on an interaction with the environment. Examples of an RL algorithm may include (i) Q-learning, (ii) Multi-armed bandit learning, (iii) Deep Q Network, State-Action-Reward-State-Action (SARSA), (iv) Temporal Difference Learning, (v) Actor-critic reinforcement learning, (vi) Deep deterministic policy gradient, and (vii) Monte-Carlo tree search. The RL may be further grouped into AI/ML model-based RL and AI/ML model-free RL. Model-based RL is an RL algorithm that uses a predictive AI/ML model to obtain transition probabilities between states using various dynamic states of the environment and an AI/ML model in which these states lead to rewards. Model-free RL is a value- or policy-based RL algorithm that achieves maximum future reward, which is less computationally complex in multi-agent environments/states and does not require accurate representation of the environment. The RL algorithm may also be classified into value-based RL versus policy-based RL, policy-based RL versus non-policy RL, and the like.

### AI/ML models

FIG. 9 shows an example of a feed-forward neural network (FFNN) AI/ML model. Referring to FIG. 9, the FFNN AI/ML model includes an input layer, a hidden layer, and an output layer.

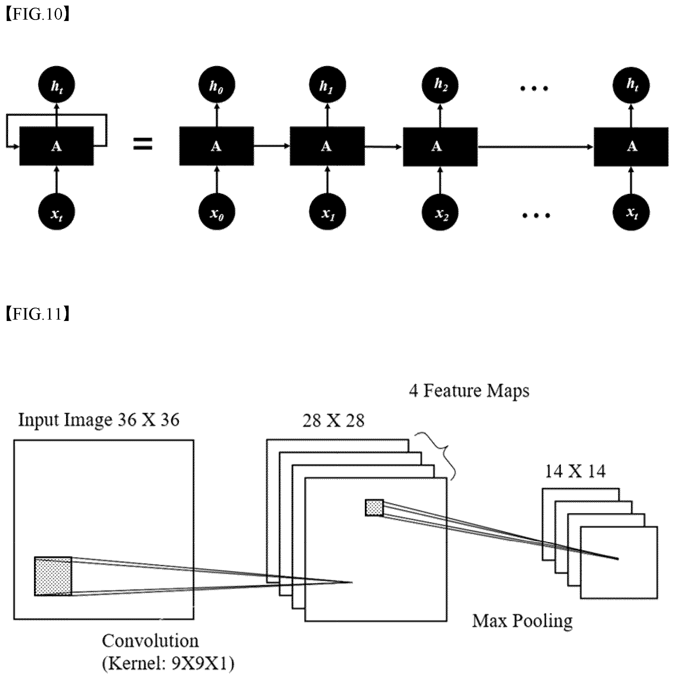

FIG. 10 illustrates a recurrent neural network (RNN) AI/ML model. Referring to FIG. 10, the RNN AI/ML model is a type of artificial neural network with a directed cycle, where hidden nodes are connected by directed edges, which is suitable for processing sequential data such as speech and text. One type of RNN is a long short-term memory (LSTM), which adds a cell state to the hidden state of the RNN. Specifically, in the LSTM, input gates, forget gates, and output gates are added to an RNN cell, along with a cell state.

FIG. 11 illustrates a convolutional neural network (CNN) AI/ML model. A CNN applies convolution operations, commonly used in image or video processing, to achieve two purposes: reducing the complexity of AI/ML models and extracting valuable features. Referring to FIG. 11, a kernel (or filter) refers to a unit/structure that applies weights to a specific range/unit of input. A stride refers to the movement range of a kernel within an input. A feature map refers to the result of applying a kernel to an input. Padding refers to a value added to adjust the size of a feature map. Pooling refers to an operation (e.g., max pooling, average pooling) used to downsample a feature map to reduce the size of the feature map.

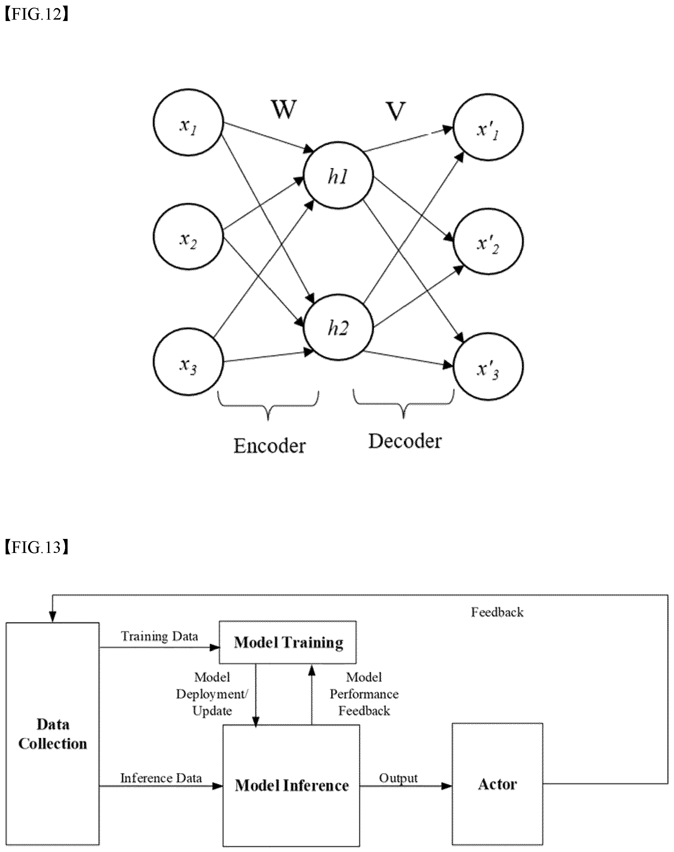

FIG. 12 illustrates an autoencoder AI/ML model. Referring to FIG. 12, an autoencoder is a neural network that receives a feature vector x as an input and outputs the same vector or a similar vector x'. The autoencoder has the characteristic that input and output nodes are the same and is a type of unsupervised learning.

FIG. 13 is a diagram for explaining a framework for 3GPP radio access network (RAN) intelligence.

The following terms related to AI/ML can be defined (refer to 3GPP TS37.817):
- Data Collection: Data collection refers to data gathered from network nodes, management entities, or UEs, which serves as the foundation for AI/ML model training, data analysis, and inference.
- ML Model: An ML model is a data-driven algorithm that generates a set of outputs consisting of predicted information based on a set of inputs by applying ML techniques.
- ML Training: ML training is an online or offline process of training an AI/ML model by learning features and patterns that best represent data and obtaining the trained AI/ML model for inference.
- ML Inference: ML Inference is a process of using a trained AI/ML model to make predictions or guide decisions based on collected data and the AI/ML model.

Referring to FIG. 13, data collection is a function that provides input data for AI/ML model training and inference. Data preparation for each AI/ML algorithm (e.g., data preprocessing, cleaning, formatting, and transformation) is not performed in the data collection function.

Examples of input data may include measurements from a UE or other network entities, feedback from actors, and outputs of an AI/ML model. Training data refers to input data required for the AI/ML model training function. Inference data is input data required for the AI/ML model inference function.

AI/ML model training is a function that performs training, validation, and testing of AI/ML models as part of an AI/ML model testing procedure and generates performance metrics for the AI/ML models. If necessary, he AI/ML model training function may handle data preparation (e.g., data pre-processing, cleaning, forming, and transformation) based on the training data provided by the data collection function.

AI/ML model deployment/update: AI/ML model deployment/update is used to initially deploy a trained, validated, and tested AI/ML model to the AI/ML model inference function or to provide an updated AI/ML model to the AI/ML model inference function.

Model inference is a function that provides AI/ML model inference outputs (e.g., predictions or decisions). In some cases, the AI/ML model inference function may provide performance feedback to the AI/ML model training function. If necessary, the AI/ML model inference function may also perform data preparation (e.g., data preprocessing, cleaning, formatting, and transformation) based on the inference data provided by the data collection function. An output refers to the inference output of the AI model generated by the AI/ML model inference function. AI/ML model performance feedback may be used to monitor the performance of the AI/ML model.

An actor is a function that receives the output of the AI/ML model inference function and triggers or performs related operations. The actor may trigger tasks directed toward other entities or the actor itself. Feedback refers to information that may be necessary to derive training data, inference data, or performance feedback.

### Data set

Data used in AI/ML may include at least one of the following: AI/ML model training data, validation data, or test data.

AI/ML model training data refers to a dataset used for training an AI/ML model.

Validation data is a dataset used to validate an AI/ML model after training is complete. The validation data may be used to prevent overfitting of the AI/ML model training dataset. The validation data may also serve as a dataset for selecting the best model among various AI/ML models trained during the training process. Thus, the validation data may also be considered a type of learning.

Test data is a dataset used for final evaluation and may be independent of training.

For example, AI/ML model training data and validation data may be used in a ratio of approximately 8:2 or 7:3. If test data is also considered, a ratio of 6:2:2 (training: validation: test) may be used.

### Collaboration level

For example, collaboration levels may be defined as follows, depending on the capability of the AI/ML functions between the BS and UE. Modifications through combinations or separations of the following levels may also be possible.

Cat 0a) No collaboration framework: An AI/ML algorithm is implemented but does not require changes to a wireless interface.

Cat 0b) A modified wireless interface is provided to implement a more efficient AI/ML algorithm.

Cat 1) Collaboration between nodes is possible to improve the AI/ML algorithm of each node. The UE may receive assistance from the BS or provide assistance to the BS for training, adaptation, etc. However, the exchange of AI/ML model information between network nodes is not required.

Cat 2) As a joint AI/ML operation between the UE and BS, indications/exchanges between network nodes are required.

### Beam prediction reporting

According to the current NR standard, the UE reports at least one beam index, preferably from the first best beam to the nth best beam, as a CRI (or synchronization signal block identifier (SSBID)). The UE may also report the measured results for the corresponding beams, such as L1-RSRP or L1-SINR.

If an AI/ML UE is capable of predicting the future best beam, beam reporting may include future beam information in addition to past or current beam information according to the existing NR standard, as shown in Table 6.

**[Table 6]**

| | T1 (Legacy) | T2 | T3 |
|---|---|---|---|
| B1 | CRI_{B1,T1}, L1-RSRP_{B1,T1} | CRI_{B1,T2}, L1-RSRP_{B1,T2} | CRI_{B1,T3}, L1-RSRP_{B1,T3} |
| B2 | CRI_{B2,T1}, L1-RSRP_{B2,T1} | CRI_{B2,T2}, L1-RSRP_{B2,T2} | CRI_{B2,T3}, L1-RSRP_{B2,T3} |
| B3 | CRI_{B3,T1}, L1-RSRP_{B3,T1} | CRI_{B3,T2}, L1-RSRP_{B3,T2} | CRI_{B3,T3}, L1-RSRP_{B3,T3} |

In Table 6, CRI _{Bi,Tj} and L1-RSRP _{Bi,Tj} represent the beam index and L1-RSRP for the i-th best beam at time Tj, respectively. T1 refers to a current/past beam reporting time according to the existing NR standard, while T2 and T3 represent future beam reporting times for performing prediction-based beam reporting.

The present disclosure describes an encoding method for beam prediction reporting with reference to the example in Table 6.

### First Encoding Method)

For each Tj, the existing encoding method is applied as it is. That is, for each Tj, L1-RSRP corresponding to B1 is encoded as an absolute value using m bits, while L1-RSRP corresponding to B2 and B3 is encoded in n bits as the difference value relative to the absolute value.

For example, m may be determined as 7 bits, and n may be determined as 4 bits, or the BS may assign arbitrary values to the UE.

### Second Encoding Method)

Regardless of T, the largest value among L1-RSRP values corresponding to B1 is encoded as an absolute value using m bits. All the remaining L1-RSRP values are encoded in n bits as the difference relative to the absolute value.

The UE reports to the BS which L1-RSRP value among L1-RSRP values corresponding to B1 is the largest. Specifically, the UE reports which Tj value among T1, T2, and T3 corresponds to the largest B1 value. In other words, the UE reports which of CRI _{B1,T1}, CRI _{B1,T2}, or CRI _{B1,T3} corresponds to the largest RSRP.

### Third Encoding Method)

A method of combining the first encoding method and the second encoding method described above may be considered. Specifically, as in the second encoding method, if L1-RSRP values for B1 are encoded and then, L1-RSRP values for B2 and B3 at the same time are encoded, difference values of the L1-RSRP for B2 and difference values of the L1-RSRP for B3 are encoded based on the L1-RSRP value of B1 at the corresponding time.

### Fourth Encoding Method)

In the second encoding method, L1-RSRP values for B1 at different times are compared, and the L1-RSRP values for B1 are encoded as absolute values/difference values. In the fourth encoding method, this operation is extended such that the L1-RSRP values for B1 as well as other Bi are encoded as absolute values/difference values in the same way. That is, after comparing the L1-RSRP values for B2 (or B3) at different times, the L1-RSRP values for B2 (or B3) are encoded as absolute values/difference values.

Hereinafter, methods of determining the concatenation ordering of encoded L1-RSRP values will be described with reference to the example in Table 6.

### First Concatenation Ordering Method)

For each Tj, the existing concatenation ordering method is applied as it is. That is, for each Tj, encoded L1-RSRP values are concatenated in the order of B1, B2, and B3. The L1-RSRP values configured for Tj are then concatenated in time order (i.e., in the order of T1, T2, and T3).

### Second Concatenation Ordering Method)

If the second encoding method proposed above is used, the L1-RSRP values for Tj including the largest L1-RSRP value are concatenated first. For example, if the largest L1-RSRP value exists at T2 (i.e., if CRI _{B1,T2} corresponds to the largest L1-RSRP value), the L1-RSRP values for T2 are concatenated first, and then concatenation is performed for T3 and T1 in order. Specifically, circular rotation is performed based on T2, and the L1-RSRP values for subsequent times are concatenated. Alternatively, the L1-RSRP values for T2 are concatenated first, and then concatenation is performed for the remaining times in order starting from T1.

The L1-RSRP values at each Tj are concatenated in the order of B1, B2, and B3 according to the existing method.

According to this method, m-bit L1-RSRP values may be placed at the front, and then the remaining n-bit L1-RSRP values may be placed afterward. Since the positions of m bits are fixed at the front, the implementation of the UE may be simplified.

### Third Concatenation Ordering Method)

Concatenation is performed in the order of B1, B2, and B3. In other words, L1-RSRP values are concatenated by performing encoding in the order of the first best beam, the second best beam, and the third best beam. For each Bi, L1-RSRP values are concatenated in time order (i.e., in the order of T1, T2, and T3).

### Fourth Concatenation Ordering Method)

Similar to the third concatenation ordering method, concatenation is performed in the order of B1, B2, and B3. That is, L1-RSRP values are concatenated by performing encoding in the order of the first best beam, the second best beam, and the third best beam. For B1, the L1-RSRP values are concatenated starting with the largest value first. The remaining L1-RSRP values for B1 are concatenated in time order. Alternatively, circular rotation is performed based on Tj corresponding to the largest L1-RSRP value for B1, and the L1-RSRP values for subsequent times are concatenated. For B2 and B3 other than B1, concatenation is performed in the same order as the time order for B1.

Alternatively, the method of determining the time order for B1 may be equally applied to determine the concatenation order for B2 and B3 except for B1. That is, the largest value among L1-RSRP values for B2 is concatenated first, and the largest value among L1-RSRP values for B3 is concatenated first.

If the fourth encoding method proposed above is used, according to the third concatenation ordering method, m-bit L1-RSRP values may be placed at the front, and then the remaining n-bit L1-RSRP values may be placed afterward. Since the positions of m bits are fixed at the front, the implementation of the UE may be simplified.

The first to fourth encoding methods and the first to fourth concatenation ordering methods may also be extended to group-based beam reporting. For reference, in group-based beams, paired beams refer to beam combinations capable of being received simultaneously.

Table 7 below shows an example of group-based beam prediction information for future time points.

**[Table 7]**

| | T1 (Legacy) | T2 | T3 |
|---|---|---|---|
| B1 | CRI_{B1,T1,1}, L1-RSRP_{B1,T1,1} | CRI_{B1,T2,1}, L1-RSRP_{B1,T2,1} | CRI_{B1,T3,1}, L1-RSRP_{B1,T3,1} |
| | CRI_{B1,T1,2}, L1-RSRP_{B1,T1,2} | CRI_{B1,T2,2}, L1-RSRP_{B1,T2,2} | CRI_{B1,T3,2}, L1-RSRP_{B1,T3,2} |
| B2 | CRI_{B2,T1,1}, L1-RSRP_{B2,T1,1} | CRI_{B2,T2,1}, L1-RSRP_{B2,T2,1} | CRI_{B2,T3,1}, L1-RSRP_{B2,13,1} |
| | CRI_{B2,T1,2}, L1-RSRP_{B2,T1,2} | CRI_{B2,T2,2}, L1-RSRP_{B2,T2,2} | CRI_{B2,T3,2}, L1-RSRP_{B2,T3,2} |
| B3 | CRI_{B3,T1,1}, L1-RSRP_{B3,T1,1} | CRI_{B3,T2,1}, L1-RSRP_{B3,T2,1} | CRI_{B3,T3,1}, L1-RSRP_{B3,T3,1} |
| | CRI_{B3,T1,2}, L1-RSRP_{B3,T1,2} | CRI_{B3,T2,2}, L1-RSRP_{B3,T2,2} | CRI_{B3,T3,2}, L1-RSRP_{B3,T3,2} |

In Table 7, CRI _{Bi,Tj,1} and CRI _{Bi,Tj,2} represent a CRI pair capable of being received simultaneously, and L1-RSRP _{Bi,Tj,1} and L1-RSRP _{Bi,Tj,2} represent an L1-RSRP pair corresponding to the CRI pair.

Referring to Table 7, the L1-RSRP encoding methods proposed in the present disclosure may be extended and applied as follows.

### First Encoding Method)

For each Tj, the existing encoding method is applied as it is. That is, for each T, the larger L1-RSRP value between L1-RSRP _{B1,T1,1} and L1-RSRP _{B1,T1,2} is encoded as an absolute value using m bits, while the remaining L1-RSRP value is encoded as the difference relative to the absolute value using n bits.

For example, m may be determined as 7 bits, and n may be determined as 4 bits, or the BS may assign arbitrary values to the UE.

### Second Encoding Method)

Regardless of T, the largest value among L1-RSRP values corresponding to B1 is encoded as an absolute value using m bits. All the remaining L1-RSRP values are encoded in n bits as the difference relative to the absolute value. The UE reports to the BS which L1-RSRP value among L1-RSRP values corresponding to B1 is the largest. That is, the UE reports which Tj value among T1, T2, and T3 corresponds to the largest L1-RSRP value for B1.

For example, the UE determines which one among CRI _{B1,T1}, CRI _{B1,T2}, and CRI _{B1,T3} corresponds to the largest L1-RSRP value. The UE then reports which one of CRI _{B1,Tj,1} and CRI _{B1,Tj,2} corresponds to the largest L1-RSRP value.

### Third Encoding Method)

The first encoding method and the second encoding method may be combined. Specifically, as in the second encoding method, L1-RSRP values for B1 are encoded first. Then, for B1, B2, and B3 at the same time, the difference values between B2 and B3 are encoded based on the value of B1 for the corresponding time.

### Fourth Encoding Method)

In the second encoding method, L1-RSRP values for B1 at different times are compared, and the L1-RSRP values for B1 are encoded as absolute values/difference values. In the fourth encoding method, this operation is extended such that the L1-RSRP values for B1 as well as other Bi are encoded as absolute values/difference values in the same way. That is, after comparing the L1-RSRP values for B2 (or B3) at different times, the L1-RSRP values for B2 (or B3) are encoded as absolute values/difference values.

The aforementioned concatenation ordering methods for encoded L1-RSRP may be extended and applied with reference to the example in Table 7.

### First Concatenation Ordering Method)

For each Tj, the existing concatenation ordering method is applied as it is. That is, for each Tj, encoded L1-RSRP values are concatenated in the order of B1, B2, and B3. The L1-RSRP values configured for Tj are then concatenated in time order (i.e., in the order of T1, T2, and T3).

### Second Concatenation Ordering Method)

If the second encoding method proposed above is used, the L1-RSRP values for Tj including the largest L1-RSRP pair are concatenated first. For example, if the largest L1-RSRP value exists at T2 (i.e., if CRI _{B1,T2,1} or CRI _{B1,T2,2} corresponds to the largest L1-RSRP value), the L1-RSRP values for T2 are concatenated first (i.e., before the L1-RSRP values for T1 and T3).

In addition, among two L1-RSRP values that constitute the largest L1-RSRP pair, a larger L1-RSRP value is concatenated first. For example, if the first L1-RSRP value in the pair is larger, the concatenation is performed in the order of the first L1-RSRP value followed by the second L1-RSRP value. If the second L1-RSRP value is larger, the concatenation is performed in the order of the second L1-RSRP value followed by the first L1-RSRP value. The order determined within the pair is applied consistently to the remaining L1-RSRP pairs.

The L1-RSRP values for T2 are placed first, and then concatenation is performed in the order of T3 and T1. Specifically, circular rotation is performed based on T2, and the L1-RSRP values for subsequent times are concatenated in order. Alternatively, the L1-RSRP values for T2 are concatenated first, and then concatenation is performed for the remaining times in order starting from T1.

The L1-RSRP values at each Tj are concatenated in the order of B1, B2, and B3 according to the existing method.

According to this method, m-bit L1-RSRP values may be placed at the front, and then the remaining n-bit L1-RSRP values may be placed afterward. Since the positions of m bits are fixed at the front, the implementation of the UE may be simplified.

### Third Concatenation Ordering Method)

Concatenation is performed in the order of B1, B2, and B3. In other words, L1-RSRP values are concatenated by performing encoding in the order of the first best beam, the second best beam, and the third best beam. For each Bi, L1-RSRP values are concatenated in time order (i.e., in the order of T1, T2, and T3).

In addition, among two L1-RSRP values that constitute the largest L1-RSRP pair, a larger L1-RSRP value is concatenated first. For example, if the first L1-RSRP value in the pair is larger, the concatenation is performed in the order of the first L1-RSRP value followed by the second L1-RSRP value. If the second L1-RSRP value is larger, the concatenation is performed in the order of the second L1-RSRP value followed by the first L1-RSRP value. The order determined within the pair is applied consistently to the remaining L1-RSRP pairs.

### Fourth Concatenation Ordering Method)

Similar to the third concatenation ordering method, concatenation is performed in the order of B1, B2, and B3. That is, L1-RSRP values are concatenated by performing encoding in the order of the first best beam, the second best beam, and the third best beam. For B1, the L1-RSRP pairs are concatenated starting with a pair containing the largest L1-RSRP value, and within the pair containing the largest L1-RSRP value, the larger L1-RSRP is concatenated first. For example, if the first L1-RSRP value in the pair is larger, the concatenation is performed in the order of the first L1-RSRP value followed by the second L1-RSRP value. If the second L1-RSRP value is larger, the concatenation is performed in the order of the second L1-RSRP value followed by the first L1-RSRP value. The order determined within the pair is applied consistently to the remaining L1-RSRP pairs.

Additionally, the remaining L1-RSRP pairs for B1 are concatenated in time order. Alternatively, circular rotation is performed based on Tj corresponding to the largest L1-RSRP pair among L1-RSRP pairs for B1, and then L1-RSRP pairs for subsequent times are concatenated. For B2 and B3 other than B1, concatenation is performed in the same order as the time order for B1.

Alternatively, the method of determining the time order for B1 or the method of determining the encoding order of L1-RSRP pairs at each time may be equally applied to determine the concatenation order for B2 and B3 except for B1.

If the second encoding method proposed above is used, according the fourth concatenation ordering method, m-bit L1-RSRP values may be placed at the front, and then the remaining n-bit L1-RSRP values may be placed afterward. Since the positions of m bits are fixed at the front, the implementation of the UE may be simplified.

### Method of determining L1-RSRP difference values for beam prediction reporting

In the encoding methods described above, a reference L1-RSRP absolute value is encoded using m bits, and L1-RSRP difference values, which are calculated relative to the absolute value, are encoded using n bits. However, a more advanced method may be considered as follows.

In the proposed encoding methods (e.g., second encoding method or third encoding method), a new method of determining difference values may be introduced as follows. The difference values for B1 L1-RSRP at different times (i.e., L1-RSRP time-varying values for the 1st best beam) are represented using n1 bits, while the difference values for B2 and B3 L1-RSRP are represented using n2 bits. This is because the range of time-varying L1-RSRP differences and the range of differences based on beam ranking may differ.

In this case, n1 and n2 may be configured as follows: n1>n2 or n2<n1. Even if n1=n2, a differential L1-RSRP table corresponding to n1 and a differential L1-RSRP table corresponding to n2 may be configured differently. For example, even if both n1 and n2 are 2 bits, the differential L1-RSRP table for n1 may be configured as 0, -1dB, -2dB, and -3dB, while the differential L1-RSRP table for n2 may be configured as 0, -3dB, -6dB, and -9dB.

If the differential L1-RSRP table corresponding to n1 or the differential L1-RSRP table corresponding to n2 is selected by the network AI, the network AI may configure the UE AI with values to be applied. If the selection is made by the UE AI, the UE may provide feedback to the network regarding preferred differential L1-RSRP tables (and/or the number of relevant bits). For example, the UE may report the index of a differential L1-RSRP table that the UE applies along with the corresponding L1-RSRP report. Alternatively, the UE may report the L1-RSRP differential table index using UCI/MAC-CE, separately from the L1-RSRP report.

If the differential L1-RSRP table corresponding to n1 or the differential L1-RSRP table corresponding to n2 is determined through joint AI/ML implementation between the network and the UE, one of the network and UE may provide the other with trained parameters for an AI/ML model that outputs the index of a differential L1-RSRP table (and/or the number of relevant bits) to be applied to the time-varying values of the best beam and/or the variation between the first best beam and the second best beam based on channel/beam-related input(s). Alternatively, one of the network and UE may provide the other with the trained AI/ML model.

The aforementioned method of determining L1-RSRP difference values may also be applied to the described fourth encoding method. For example, an n1-bit differential L1-RSRP table, n2-bit differential L1-RSRP table, and n3-bit differential L1-RSRP table may be used for B1, B2, and B3.

In group-based beam prediction reporting, beam reporting is performed on a beam pair basis. That is, for each of Bi and Tj in Table 7, a CRI pair and an L1-RSRP pair are reported. In such cases, the first beam in the beam pair is selected from a configured first CSI resource set, and the second beam is selected from a configured second CSI resource set. In this case, an n1-bit differential L1-RSRP table may be used for encoding L1-RSRP values between beams in the same CSI resource set, and an n2-bit differential L1-RSRP table may be used for encoding L1-RSRP values between beams from different CSI resource sets.

The encoding methods, concatenation ordering methods, and L1-RSRP difference value determination methods proposed in the present disclosure may be applied in combination.

In the present disclosure, L1-RSRP has been used as an example, but the principals of the present disclosure may be equally applied to L1-SINR reporting methods.

In the present disclosure, a CRI has been used as an example, but the principals of the present disclosure may be equally applied to SSBRI reporting methods based on selection of an SSB.

The applicability of the encoding methods, concatenation ordering methods, and L1-RSRP difference value determination methods proposed in the present disclosure may be configured by the BS for the UE. Additionally, the UE may report to the BS whether the proposed methods are applied and its preference for the proposed methods.

In the present disclosure, the encoding method and concatenation order are determined based on the size of L1-RSRP. However, if there are multiple L1-RSRP values that are equally the largest, one of the L1-RSRP values is selected according to a specific rule, and the selected L1-RSRP is assumed as the largest L1-RSRP to apply the proposed methods. For example, the specific rule includes selecting a value with the higher or lower time index. Alternatively, a value with the higher or lower CSI-RS index (or CSI-RS ID) used for beam measurement may be selected. Additionally, a value with the higher or lower SSB index (or SSB ID) used for beam measurement may also be selected.

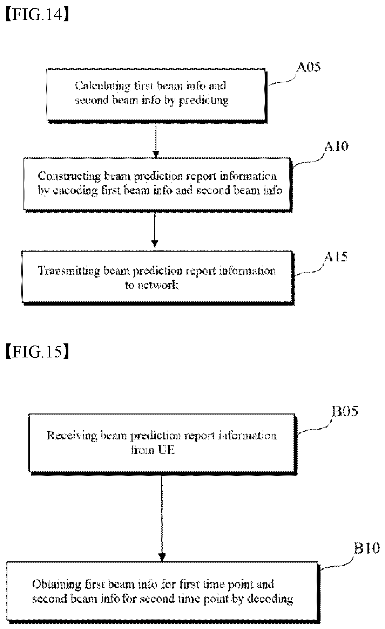

FIG. 14 illustrates a flowchart in which a UE performs beam prediction reporting according to an embodiment of the present disclosure.

Referring to FIG. 14, in step A05, the UE predicts and calculates first beam information related to a first time point and second beam information related to a second time point. Preferably, the first time point represents the current time, and the second time point represents a future time. However, it does not exclude cases where the first time point is also a future time.

Specifically, each of the first beam information and at least one piece of the second beam information may include information on a first best beam and a second best beam. For the convenience of explanation, it is assumed in FIG. 14 that two pieces of beam information are included for two time points, respectively. However, as described above, three or more pieces of beam information may be included for three or more time points, respectively.

In step A10, the UE encodes the first beam information and the second beam information to configure beam prediction reporting information.

Specifically, during the encoding process, the beam prediction reporting information may include: information on an absolute value of a measurement for the first best beam included in the first beam information; information on a first difference value of a measurement for the second best beam included in the first beam information relative to the absolute value; information on a second difference value of a measurement for the first best beam included in the second beam information relative to the absolute value; and information on a third difference value of a measurement for the second best beam included in the second beam information relative to the second difference value.

Here, a bit size used to encode the second difference value may differ from a bit size used to encode the first difference value and the third difference value.

On the other hand, the first difference value to the third difference value may be encoded using the same bit size. In this case, an interval between codewords obtained by encoding the second difference value may be different from an interval between codewords obtained by encoding the first difference value and an interval between codewords obtained by encoding the third difference value.

Additionally, the beam prediction reporting information may be structured in the order of the absolute value, the first difference value, the second difference value, and the third difference value. Alternatively, the beam prediction reporting information may be structured in the order of the absolute value, the second difference value, the first difference value, and the third difference value.

Finally, in step A15, the beam prediction reporting information is transmitted to a network.

FIG. 15 illustrates a flowchart in which a BS receives a beam prediction report from a UE according to an embodiment of the present disclosure.

Referring to FIG. 15, in step B05, the BS receives beam prediction reporting information from the UE. In step B 10, the BS decodes first beam information related to a first time point and second beam information related to a second time point included in the beam prediction reporting information, thereby obtaining the first beam information and the second beam information.

Specifically, each of the first beam information and at least one piece of the second beam information may include information on a first best beam and a second best beam.

The first beam information includes: information on an absolute value of a measurement for the first best beam included in the first beam information; and information on a first difference value of a measurement for the second best beam included in the first beam information relative to the absolute value.

The second beam information includes: information on a second difference value of a measurement for the first best beam included in the second beam information relative to the absolute value; and information on a third difference value of a measurement for the second best beam included in the second beam information relative to the second difference value.

Here, the beam prediction reporting information may be structured in the order of the absolute value, the first difference value, the second difference value, and the third difference value. Alternatively, the beam prediction reporting information may be structured in the order of the absolute value, the second difference value, the first difference value, and the third difference value.

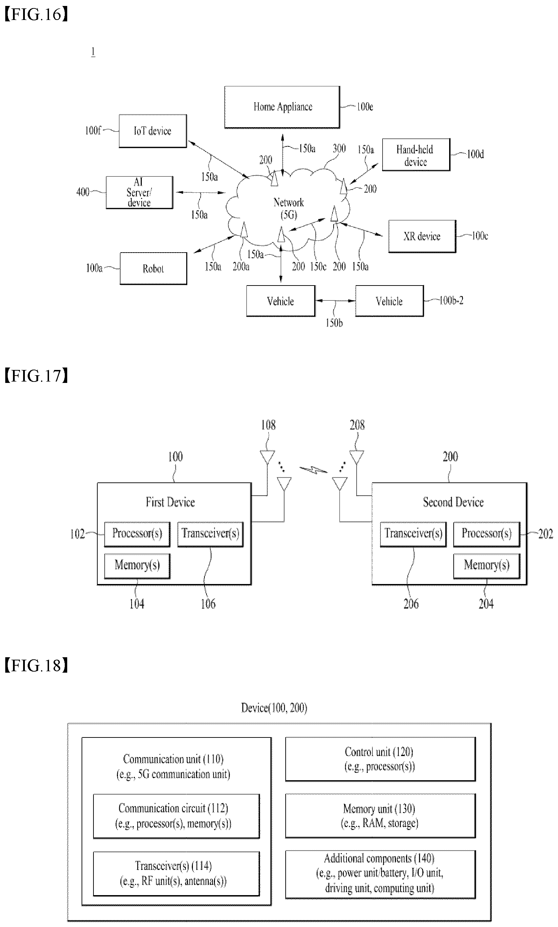

FIG. 16 illustrates an exemplary communication system to which the embodiment is applied.

Referring to FIG. 16, a communication system 1 applied to the embodiment includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/5G devices. The wireless devices may include, without being limited to, a robot 100a, vehicles 100b-1 and 100b-2, an eXtended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous driving vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g., Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/downlink communication 150a, sidelink communication 150b (or, D2D communication), or inter BS communication (e.g., relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the embodiment.

FIG. 17 illustrates exemplary wireless devices to which the embodiment is applicable.

Referring to FIG. 17, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 16.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information obtained by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the embodiment, the wireless device may represent a communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the embodiment, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

FIG. 18 illustrates other exemplary wireless devices to which the embodiment is applied. The wireless devices may be implemented in various forms according to a use case/service (see FIG. 16)

Referring to FIG. 18, wireless devices 100 and 200 may correspond to the wireless devices 100 and 200 of FIG. 17 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 17. For example, the transceiver(s) 114 may include the one or more transceivers 106 and 206 and/or the one or more antennas 108 and 208 of FIG. 17. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 16), the vehicles (100b-1 and 100b-2 of FIG. 16), the XR device (100c of FIG. 16), the hand-held device (100d of FIG. 16), the home appliance (100e of FIG. 16), the IoT device (100f of FIG. 16), a digital broadcast terminal, a hologram device, a public safety device, an MTC device, a medicine device, a fintech device (or a finance device), a security device, a climate/environment device, the AI server/device (400 of FIG. 16), the BSs (200 of FIG. 16), a network node, etc. The wireless device may be used in a mobile or fixed place according to a use-example/service.

In FIG. 18, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

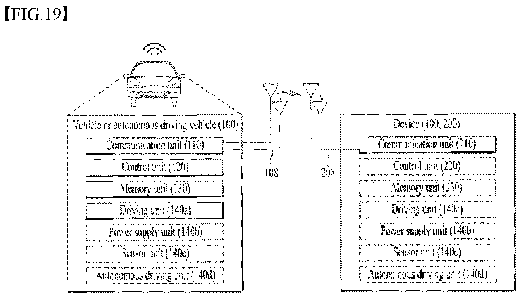

FIG. 19 illustrates an exemplary vehicle or autonomous driving vehicle to which the embodiment. The vehicle or autonomous driving vehicle may be implemented as a mobile robot, a car, a train, a manned/unmanned aerial vehicle (AV), a ship, or the like.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

FIG. 18 illustrates other exemplary wireless devices to which the embodiment is applied. The wireless devices may be implemented in various forms according to a use case/service (see FIG. 16)

Referring to FIG. 18, wireless devices 100 and 200 may correspond to the wireless devices 100 and 200 of FIG. 17 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 17. For example, the transceiver(s) 114 may include the one or more transceivers 106 and 206 and/or the one or more antennas 108 and 208 of FIG. 17. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 16), the vehicles (100b-1 and 100b-2 of FIG. 16), the XR device (100c of FIG. 16), the hand-held device (100d of FIG. 16), the home appliance (100e of FIG. 16), the IoT device (100f of FIG. 16), a digital broadcast terminal, a hologram device, a public safety device, an MTC device, a medicine device, a fintech device (or a finance device), a security device, a climate/environment device, the AI server/device (400 of FIG. 16), the BSs (200 of FIG. 16), a network node, etc. The wireless device may be used in a mobile or fixed place according to a use-example/service.

In FIG. 18, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

FIG. 19 illustrates an exemplary vehicle or autonomous driving vehicle to which the embodiment. The vehicle or autonomous driving vehicle may be implemented as a mobile robot, a car, a train, a manned/unmanned aerial vehicle (AV), a ship, or the like.

Referring to FIG. 19, a vehicle or autonomous driving vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 18, respectively

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous driving vehicle 100. The control unit 120 may include an Electronic Control Unit (ECU). The driving unit 140a may cause the vehicle or the autonomous driving vehicle 100 to drive on a road. The driving unit 140a may include an engine, a motor, a powertrain, a wheel, a brake, a steering device, etc. The power supply unit 140b may supply power to the vehicle or the autonomous driving vehicle 100 and include a wired/wireless charging circuit, a battery, etc. The sensor unit 140c may acquire a vehicle state, ambient environment information, user information, etc. The sensor unit 140c may include an Inertial Measurement Unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the obtained data. The control unit 120 may control the driving unit 140a such that the vehicle or the autonomous driving vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly obtained data/information. The communication unit 110 may transfer information about a vehicle position, the autonomous driving path, and/or the driving plan to the external server. The external server may predict traffic information data using AI technology, etc., based on the information collected from vehicles or autonomous driving vehicles and provide the predicted traffic information data to the vehicles or the autonomous driving vehicles.

Those skilled in the art will appreciate that the embodiment may be carried out in other specific ways than those set forth herein without departing from the spirit and essential characteristics of the embodiment. The above embodiments are therefore to be construed in all aspects as illustrative and not restrictive. The scope of the disclosure should be determined by the appended claims and their legal equivalents, not by the above description, and all changes coming within the meaning and equivalency range of the appended claims are intended to be embraced therein. It is obvious to those skilled in the art that claims that are not explicitly cited in each other in the appended claims may be presented in combination as an embodiment or included as a new claim by a subsequent amendment after the application is filed.

It will be apparent to those skilled in the art that the disclosure may be embodied in other specific forms without departing from the scope of the present disclosure. Accordingly, the above detailed description should not be construed as limiting in all respects but should be considered as illustrative. The scope of the disclosure should be determined by a reasonable interpretation of the appended claims, and all changes within the equivalent scope of the present disclosure are intended to be included in the scope of the disclosure.

### INDUSTRIAL APPLICABILITY

The disclosure is applicable to UEs, BSs, or other apparatuses in a wireless mobile communication system.

## Claims

1. A method of performing beam prediction reporting by a user equipment (UE) in a wireless communication system, the method comprising:
predicting and calculating first beam information related to a first time point and second beam information related to a second time point;
configuring beam prediction reporting information by encoding the first beam information and the second beam information; and
transmitting the beam prediction reporting information to a network,
wherein each of the first beam information and at least one piece of the second beam information comprises information on a first best beam and a second best beam,
wherein a measurement for the first best beam included in the first beam information is greater than a measurement for the first best beam included in the second beam information, and
wherein the beam prediction reporting information comprises:
information on an absolute value of the measurement for the first best beam included in the first beam information;
information on a first difference value of a measurement for the second best beam included in the first beam information relative to the absolute value;
information on a second difference value of a measurement for the first best beam included in the second beam information relative to the absolute value; and
information on a third difference value of a measurement for the second best beam included in the second beam information relative to the second difference value.

2. The method of claim 1, wherein the beam prediction reporting information is structured in an order of the absolute value, the first difference value, the second difference value, and the third difference value.

3. The method of claim 1, wherein the beam prediction reporting information is structured in an order of the absolute value, the second difference value, the first difference value, and the third difference value.

4. The method of claim 1, wherein a bit size used to encode the second difference value is different from a bit size used to encode the first difference value and a bit size used to encode the third difference value.

5. The method of claim 1, wherein the first difference value to the third difference value are encoded with a same bit size, and
wherein an interval between codewords obtained by encoding the second difference value is different from an interval between codewords obtained by encoding the first difference value and an interval between codewords obtained by encoding the third difference value.

6. The method of claim 1, wherein the first time point is a current time or a future time, and
wherein the second time point is a future time.

7. A user equipment (UE) in a wireless communication system, the UE comprising:
at least one transceiver;
at least one processor; and
at least one computer memory operably connected to the at least one processor and storing instructions that, when executed, cause the at least one processor to perform operations comprising:
predicting and calculating first beam information related to a first time point and second beam information related to a second time point;
configuring beam prediction reporting information by encoding the first beam information and the second beam information; and
transmitting the beam prediction reporting information to a network,
wherein each of the first beam information and at least one piece of the second beam information comprises information on a first best beam and a second best beam,
wherein a measurement for the first best beam included in the first beam information is greater than a measurement for the first best beam included in the second beam information, and
wherein the beam prediction reporting information comprises:
information on an absolute value of the measurement for the first best beam included in the first beam information;
information on a first difference value of a measurement for the second best beam included in the first beam information relative to the absolute value;
information on a second difference value of a measurement for the first best beam included in the second beam information relative to the absolute value; and
information on a third difference value of a measurement for the second best beam included in the second beam information relative to the second difference value.

8. The UE of claim 7, wherein the beam prediction reporting information is structured in an order of the absolute value, the first difference value, the second difference value, and the third difference value.

9. The UE of claim 7, wherein the beam prediction reporting information is structured in an order of the absolute value, the second difference value, the first difference value, and the third difference value.

10. The UE of claim 7, wherein a bit size used to encode the second difference value is different from a bit size used to encode the first difference value and a bit size used to encode the third difference value.

11. The UE of claim 7, wherein the first difference value to the third difference value are encoded with a same bit size, and
wherein an interval between codewords obtained by encoding the second difference value is different from an interval between codewords obtained by encoding the first difference value and an interval between codewords obtained by encoding the third difference value.

12. The UE of claim 7, wherein the first time point is a current time or a future time, and
wherein the second time point is a future time.

13. A processing device for a user equipment (UE) in a wireless communication system, the processing device comprising:
at least one processor; and
at least one computer memory operably connected to the at least one processor and storing instructions that, when executed, cause the at least one processor to perform operations comprising:
predicting and calculating first beam information related to a first time point and second beam information related to a second time point;
configuring beam prediction reporting information by encoding the first beam information and the second beam information; and
transmitting the beam prediction reporting information to a network,
wherein each of the first beam information and at least one piece of the second beam information comprises information on a first best beam and a second best beam,
wherein a measurement for the first best beam included in the first beam information is greater than a measurement for the first best beam included in the second beam information, and
wherein the beam prediction reporting information comprises:
information on an absolute value of the measurement for the first best beam included in the first beam information;
information on a first difference value of a measurement for the second best beam included in the first beam information relative to the absolute value;
information on a second difference value of a measurement for the first best beam included in the second beam information relative to the absolute value; and
information on a third difference value of a measurement for the second best beam included in the second beam information relative to the second difference value.

14. A computer-readable storage medium configured to store at least one program code comprising instructions that, when executed, cause at least one processor to perform operations comprising:
predicting and calculating first beam information related to a first time point and second beam information related to a second time point;
configuring beam prediction reporting information by encoding the first beam information and the second beam information; and
transmitting the beam prediction reporting information to a network,
wherein each of the first beam information and at least one piece of the second beam information comprises information on a first best beam and a second best beam,
wherein a measurement for the first best beam included in the first beam information is greater than a measurement for the first best beam included in the second beam information, and
wherein the beam prediction reporting information comprises:
information on an absolute value of the measurement for the first best beam included in the first beam information;
information on a first difference value of a measurement for the second best beam included in the first beam information relative to the absolute value;
information on a second difference value of a measurement for the first best beam included in the second beam information relative to the absolute value; and
information on a third difference value of a measurement for the second best beam included in the second beam information relative to the second difference value.

15. A method of receiving, by a base station (BS), beam prediction reporting information from a user equipment (UE), the method comprising:
receiving the beam prediction reporting information from the UE; and
decoding first beam information related to a first time point included in the beam prediction reporting information and second beam information related to a second time point included in the beam prediction reporting information to obtain the first beam information and the second beam information,
wherein each of the first beam information and at least one piece of the second beam information comprises information on a first best beam and a second best beam,
wherein a measurement for the first best beam included in the first beam information is greater than a measurement for the first best beam included in the second beam information,
wherein the first beam information comprises:
information on an absolute value of the measurement for the first best beam included in the first beam information; and
information on a first difference value of a measurement for the second best beam included in the first beam information relative to the absolute value, and
wherein the second beam information comprises:
information on a second difference value of a measurement for the first best beam included in the second beam information relative to the absolute value; and
information on a third difference value of a measurement for the second best beam included in the second beam information relative to the second difference value.

16. A base station (BS) in a wireless communication system, the BS comprising:
at least one transceiver;
at least one processor; and
at least one computer memory operably connected to the at least one processor and storing instructions that, when executed, cause the at least one processor to perform operations comprising:
receiving beam prediction reporting information from a user equipment (UE); and
decoding first beam information related to a first time point included in the beam prediction reporting information and second beam information related to a second time point included in the beam prediction reporting information to obtain the first beam information and the second beam information,
wherein each of the first beam information and at least one piece of the second beam information comprises information on a first best beam and a second best beam,
wherein a measurement for the first best beam included in the first beam information is greater than a measurement for the first best beam included in the second beam information,
wherein the first beam information comprises:
information on an absolute value of the measurement for the first best beam included in the first beam information; and
information on a first difference value of a measurement for the second best beam included in the first beam information relative to the absolute value, and
wherein the second beam information comprises:
information on a second difference value of a measurement for the first best beam included in the second beam information relative to the absolute value; and
information on a third difference value of a measurement for the second best beam included in the second beam information relative to the second difference value.
